(19) Europäisches Patentamt
European Patent Office
Office européen des brevets

(11) EP 4 755 652 A1

(12) **EUROPEAN PATENT APPLICATION**
published in accordance with Art. 153(4) EPC

(43) Date of publication:
**10.06.2026 Bulletin 2026/24**

(21) Application number: **24848708.4**

(22) Date of filing: **17.06.2024**

(51) International Patent Classification (IPC):
***B41M 5/00*** *(2006.01)* ***B41J 2/01*** *(2006.01)*
***C09D 11/322*** *(2014.01)*

(52) Cooperative Patent Classification (CPC):
**B41M 5/0017; B41J 2/01; B41M 5/00; C09D 11/322**

(86) International application number:
**PCT/JP2024/021868**

(87) International publication number:
**WO 2025/028047 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.07.2023 JP 2023125054**

(71) Applicant: **FUJIFILM Corporation**
**Tokyo 106-8620 (JP)**

(72) Inventors:
- **OSHIMA, Yasuhito**
**Ashigarakami-gun, Kanagawa 258-8577 (JP)**
- **MURAI, Daigo**
**Ashigarakami-gun, Kanagawa 258-8577 (JP)**
- **WACHI, Naotaka**
**Ashigarakami-gun, Kanagawa 258-8577 (JP)**

(74) Representative: **HGF**
**HGF Limited**
**4th Floor, 1 City Square**
**Leeds LS1 2ES (GB)**

(54) **IMAGE RECORDING METHOD**

(57) Provided is an image recording method including a step of applying a pretreatment liquid containing water and an aggregating agent onto a recording medium and a step of applying an ink containing water and a pigment onto a region of the recording medium, onto which the pretreatment liquid has been applied, by an ink jet method, in which at least the pretreatment liquid contains an additive (A) which is at least one selected from the group consisting of a light stabilizer and an ultraviolet absorber, the total application amount of the additive (A) applied onto the recording medium is 0.05 $g/m^2$ to 2.00 $g/m^2$, and a proportion of an application amount of the additive (A) by the application of the pretreatment liquid to the total application amount of the additive (A) applied onto the recording medium is 50% by mass to 100% by mass.

EP 4 755 652 A1

## Description

BACKGROUND OF THE INVENTION

1. Field of the Invention

The present disclosure relates to an image recording method.

2. Description of the Related Art

In the related art, various studies have been made on image recording (that is, ink jet recording) in which an ink is applied by an ink jet method.

For example, JP1998-279854A (JP-H10-279854A), JP1998-279859A (JP-H10-279859A), JP1998-279860A (JP-H10-279860A), JP1999-12519A (JP-H11-12519A), JP2002-179963A, and JP2002-79739A disclose that an ink used in an ink jet method contains a light stabilizer or an ultraviolet absorber, from the viewpoint of improving light fastness of an image to be recorded.

In addition, JP2004-276253A discloses an image recording method in which a pretreatment liquid containing an aggregating agent is applied onto a recording medium, and an ink is applied onto a region of the recording medium, onto which the pretreatment liquid has been applied, by an ink jet method, from the viewpoint of improving image quality of an image to be recorded.

SUMMARY OF THE INVENTION

However, as a result of studies by the present inventors, it has been found that, in image recording using a pretreatment liquid and an ink, in a case where light fastness of an image to be recorded is improved, at least one of color density or image quality of the image may be reduced, and in a case where the color density and image quality of the image are secured, an effect of improving light fastness may be reduced.

An object of one aspect of the present disclosure is to provide an image recording method capable of recording an image having excellent light fastness, color density, and image quality.

The present disclosure includes the following aspects.

<1> An image recording method comprising:

a step of applying a pretreatment liquid containing water and an aggregating agent onto a recording medium; and
a step of applying an ink containing water and a pigment onto a region of the recording medium, onto which the pretreatment liquid has been applied, by an ink jet method,
in which at least the pretreatment liquid contains an additive (A) which is at least one selected from the group consisting of a light stabilizer and an ultraviolet absorber,
a total application amount of the additive (A) applied onto the recording medium is 0.05 g/$m^2$ to 2.00 g/$m^2$, and
a proportion of an application amount of the additive (A) by the application of the pretreatment liquid to the total application amount of the additive (A) is 50% by mass to 100% by mass.

<2> The image recording method according to <1>,
in which the light stabilizer includes a hindered amine compound (I) having a structure represented by Formula (I).

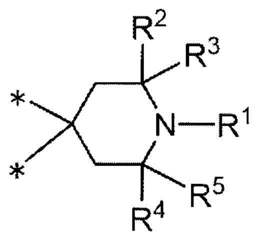

(I)

In Formula (I),

$R^1$ represents a hydrogen atom, a hydroxy group, an alkyl group having 1 to 40 carbon atoms, an alkoxy group having 1 to 40 carbon atoms, or an acyloxy group having 1 to 40 carbon atoms,

$R^2$ to $R^5$ each independently represent an alkyl group having 1 to 5 carbon atoms, and
two *'s each represent a bonding position,
provided that $R^2$ and $R^3$ or $R^4$ and $R^5$ may be linked to each other through an oxygen atom, a nitrogen atom, or a sulfur atom, or may be directly linked to each other to form a ring.

<3> The image recording method according to <1> or <2>,
in which the ultraviolet absorber includes at least one selected from the group consisting of a benzotriazole compound and a triazine compound.
<4> The image recording method according to any one of <1> to <3>,
in which the aggregating agent includes at least one selected from the group consisting of an organic acid and an organic acid salt.
<5> The image recording method according to any one of <1> to <4>,
in which the ink further contains the additive (A) which is at least one selected from the group consisting of a light stabilizer and an ultraviolet absorber.
<6> The image recording method according to any one of <1> to <5>, further comprising:
a step of applying a post-treatment liquid containing a liquid component and a resin onto a region of the recording medium, onto which the ink has been applied, after the step of applying the ink by an ink jet method.
<7> The image recording method according to <6>,
in which the post-treatment liquid further contains the additive (A) which is at least one selected from the group consisting of a light stabilizer and an ultraviolet absorber.

According to one aspect of the present disclosure, an image recording method capable of recording an image having excellent light fastness, color density, and image quality is provided.

DESCRIPTION OF THE PREFERRED EMBODIMENTS

In the present specification, the numerical ranges shown using "to" means ranges including the numerical values described before and after "to" as the minimum value and the maximum value.
In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.
In the present specification, in a case where a plurality of substances corresponding to each component in a composition is present, the amount of each component in the composition means the total amount of the plurality of substances present in the composition, unless otherwise specified.
In the present specification, a combination of two or more preferred aspects is a more preferred aspect.
In the present specification, the meaning of the term "step" includes not only an independent step but also a step whose intended purpose is achieved even in a case in which the step is not clearly distinguished from other steps.
In the present specification, "image" means general films, and "image recording" means formation of the image (that is, the film). In addition, the concept of "image" in the present specification also includes a solid image.
In the present specification, a concept of "(meth)acrylate" includes both acrylate and methacrylate, and a concept of "(meth)acrylic acid" includes both acrylic acid and methacrylic acid.

[Image recording method]

The image recording method according to the present disclosure includes a step of applying a pretreatment liquid containing water and an aggregating agent onto a recording medium (hereinafter, also referred to as "pretreatment liquid applying step") and a step of applying an ink containing water and a pigment onto a region of the recording medium, onto which the pretreatment liquid has been applied, by an ink jet method (hereinafter, also referred to as "ink applying step"), in which at least the pretreatment liquid contains an additive (A) which is at least one selected from the group consisting of a light stabilizer and an ultraviolet absorber, a total application amount of the additive (A) applied onto the recording medium is 0.05 $g/m^2$ to 2.00 $g/m^2$, and a proportion of an application amount of the additive (A) by the application of the pretreatment liquid to the total application amount of the additive (A) (hereinafter, also referred to as "proportion by application of pretreatment liquid") is 50% by mass to 100% by mass.
The image recording method according to the present disclosure may include other steps, as necessary.
In general, in image recording using a pretreatment liquid containing water and an aggregating agent and an ink containing water and a pigment, it may be required to improve light fastness of an image to be recorded.

In order to improve the light fastness of the image, it is considered to contain at least one of a light stabilizer or an ultraviolet absorber in at least one of the pretreatment liquid or the ink.

However, in a case where the light fastness of the image is improved by the method, at least one of color density or image quality of the image may be reduced. In addition, in a case where the color density and the image quality of the image are secured, an effect of improving the light fastness may be reduced.

Regarding the above-described problem, with the image recording method according to the present disclosure, an image having excellent light fastness, color density, and image quality can be recorded.

The reason why such an effect is obtained is considered as follows.

It is considered that, since the total application amount of the additive (A) applied onto the recording medium is 0.05 g/$m^2$ or more, the effect of improving the light fastness by the additive (A) is effectively exhibited, and the light fastness of the image is secured.

It is considered that, since the total application amount of the additive (A) applied onto the recording medium is 2.00 g/$m^2$ or less and the proportion by application of the pretreatment liquid (that is, the proportion of the amount of the additive (A) by the application of the pretreatment liquid to the total application amount of the additive (A) applied onto the recording medium) is 50% by mass or more, aggregating action of the aggregating agent in the pretreatment liquid is suppressed from being hindered by the additive (A), and as a result, the aggregating action of the aggregating agent in the pretreatment liquid is effectively exhibited, and thus the color density and the image quality of the image are secured.

Hereinafter, first, the additive (A) contained in at least the pretreatment liquid will be described, and then each step of the image recording method according to the present disclosure will be described.

<Additive (A)>

At least the pretreatment liquid contains an additive (A).

The additive (A) is at least one selected from the group consisting of a light stabilizer and an ultraviolet absorber.

Here, "at least the pretreatment liquid" means "at least the pretreatment liquid in the pretreatment liquid, the ink, and a post-treatment liquid (in a case where the post-treatment liquid is used)".

That is, in the present disclosure, the additive (A) may be contained not only in the pretreatment liquid but also in the ink (and/or a post-treatment liquid described later in a case where the post-treatment liquid is used).

In this case, the additive (A) contained in the pretreatment liquid and the additive (A) contained in the ink (and/or in the post-treatment liquid in a case where the post-treatment liquid is used) may be the same or different from each other as long as they are at least one selected from the group consisting of a light stabilizer and an ultraviolet absorber.

(Total application amount of additive (A))

In the image recording method according to the present disclosure, the pretreatment liquid is applied onto the recording medium, whereby the additive (A) contained at least in the pretreatment liquid is applied onto the recording medium.

Furthermore, in a case where the ink contains the additive (A), the ink is applied onto the recording medium, whereby the additive (A) contained in the ink is also applied onto the recording medium.

Furthermore, in a case where the post-treatment liquid is used and the post-treatment liquid contains the additive (A), the post-treatment liquid is applied onto the recording medium, whereby the additive (A) contained in the post-treatment liquid is also applied onto the recording medium.

In the image recording method according to the present disclosure, the total application amount of the additive (A) applied onto the recording medium is 0.05 g/$m^2$ to 2.00 g/$m^2$.

Here, the total application amount of the additive (A) means, in a case where the additive (A) is contained only in the pretreatment liquid, an application amount of the additive (A) by the application of the pretreatment liquid; in a case where the additive (A) is contained in both the pretreatment liquid and the ink, the total amount of an application amount of the additive (A) by the application of the pretreatment liquid and an application amount of the additive (A) by the application of the ink; and in a case where the additive (A) is contained in all of the pretreatment liquid, the ink, and the post-treatment liquid, the total amount of an application amount of the additive (A) by the application of the pretreatment liquid, an application amount of the additive (A) by the application of the ink, and an application amount of the additive (A) by the application of the post-treatment liquid.

The total application amount of the additive (A) being 0.05 g/$m^2$ or more contributes to improving the light fastness of the image.

From the viewpoint of further improving the light fastness of the image, the total application amount of the additive (A) is preferably 0.30 g/$m^2$ or more, more preferably 0.50 g/$m^2$ or more, and still more preferably 1.00 g/$m^2$ or more.

The total application amount of the additive (A) being 2.00 g/$m^2$ or less contributes to improving the color density and/or the image quality of the image.

From the viewpoint of further improving the color density and/or the image quality of the image, the total application amount of the additive (A) is preferably 1.75 $g/m^2$ or less, and more preferably 1.50 $g/m^2$ or less.

(Proportion by application of pretreatment liquid to total application amount of additive (A))

In the image recording method according to the present disclosure, the proportion by the application of the pretreatment liquid (that is, the proportion of the amount of the additive (A) by the application of the pretreatment liquid) to the total application amount of the additive (A) is 50% by mass to 100% by mass.

The proportion by the application of the pretreatment liquid being 50% by mass or more contributes to improving the color density and the image quality of the image.

From the viewpoint of further improving the color density and the image quality of the image, the proportion by the application of the pretreatment liquid is preferably 65% by mass to 100% by mass, more preferably 70% by mass to 100% by mass, and still more preferably 80% by mass to 100% by mass.

(Light stabilizer)

One of the options of the additive (A) is a light stabilizer.

The light stabilizer preferably includes a hindered amine compound, and more preferably includes a hindered amine compound (I) having a structure represented by Formula (I).

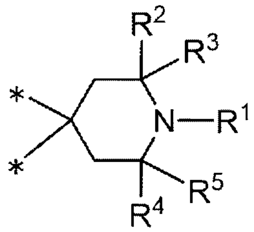

(I)

In Formula (I),

$R^1$ represents a hydrogen atom, a hydroxy group, an alkyl group having 1 to 40 carbon atoms, an alkoxy group having 1 to 40 carbon atoms, or an acyloxy group having 1 to 40 carbon atoms,
$R^2$ to $R^5$ each independently represent an alkyl group having 1 to 5 carbon atoms, and
two *'s each represent a bonding position,
provided that $R^2$ and $R^3$ or $R^4$ and $R^5$ may be linked to each other through an oxygen atom, a nitrogen atom, or a sulfur atom, or may be directly linked to each other to form a ring.

In Formula (I), $R^1$ is preferably a hydrogen atom, a hydroxy group, an alkyl group having 1 to 20 carbon atoms, an alkoxy group having 1 to 20 carbon atoms, or an acyloxy group having 1 to 20 carbon atoms, and more preferably a hydrogen atom, a hydroxy group, an alkyl group having 1 to 16 carbon atoms, an alkoxy group having 1 to 16 carbon atoms, or an acyloxy group having 1 to 16 carbon atoms.

In Formula (I), $R^2$ to $R^5$ are each independently preferably an alkyl group having 1 to 3 carbon atoms, more preferably a methyl group or an ethyl group, and still more preferably a methyl group.

A molecular weight of the hindered amine compound (for example, the hindered amine compound (I)) is preferably 1,000 or less.

(Ultraviolet absorber)

One of the options of the additive (A) is an ultraviolet absorber.

The ultraviolet absorber preferably includes at least one selected from the group consisting of a benzotriazole compound and a triazine compound.

As the benzotriazole compound, a compound having a molecular weight of 1,000 or less and having a benzotriazole structure is preferable.

As the triazine compound, a compound having a molecular weight of 1,000 or less and having a triazine structure is preferable.

<Pretreatment liquid applying step>

The image recording method according to the present disclosure includes a pretreatment liquid applying step.

The pretreatment liquid applying step is a step of applying a pretreatment liquid containing water and an aggregating agent onto a recording medium.

(Recording medium)

The recording medium is not particularly limited, and either a permeable substrate or an impermeable substrate may be used, but a permeable substrate is preferable.

In the present disclosure, the permeable substrate refers to a substrate having a water absorption rate (unit: % by mass, measurement time: 24 hours) of 0.2 or more in ASTM D570 which is an ASTM test method.

In the present disclosure, the impermeable substrate refers to a substrate having a water absorption rate (unit: % by mass, measurement time: 24 hours) of less than 0.2 in ASTM D570 which is an ASTM test method.

From the viewpoint of further improving image quality of the image, the permeable substrate preferably has a water absorption coefficient Ka of 0.05 $mL/m^2 \cdot ms^{1/2}$ or more.

The water absorption coefficient Ka of the permeable substrate is more preferably 0.05 $mL/m^2 \cdot ms^{1/2}$ to 0.5 $mL/m^2 \cdot ms^{1/2}$, still more preferably 0.1 $mL/m^2 \cdot ms^{1/2}$ to 0.4 $mL/m^2 \cdot ms^{1/2}$, and even more preferably 0.2 $mL/m^2 \cdot ms^{1/2}$ to 0.3 $mL/m^2 \cdot ms^{1/2}$

The water absorption coefficient Ka is synonymous with that described in JAPAN TAPPI Pulp and Paper Test Method No. 51: 2000 (Published by Japan Technical Association of the Pulp and Paper). The absorption coefficient Ka is a value calculated from the difference in the amount of water transferred between a contact time of 100 ms and a contact time of 900 ms using an automatic scanning absorptometer KM500Win (manufactured by KUMAGAI RIKI KOGYO Co., Ltd.).

The permeable substrate preferably includes paper.

In this case, the permeable substrate may be a permeable substrate only consisting of paper (for example, high-quality paper, alkaline paper, and the like), or may be a permeable substrate including paper and a coating layer (for example, art paper, coated paper, lightweight coated paper, lightly coated paper, and the like).

The coating layer preferably contains an inorganic pigment.

The inorganic pigment is not particularly limited, but at least one selected from silica, kaolin, clay, calcined clay, zinc oxide, tin oxide, magnesium sulfate, aluminum oxide, aluminum hydroxide, pseudo-boehmite, calcium carbonate, heavy calcium bicarbonate, satin white, aluminum silicate, smectite, zeolite, magnesium silicate, magnesium carbonate, magnesium oxide, or diatomite is preferable, and calcium carbonate, heavy calcium bicarbonate, silica, or kaolin is more preferable.

A commercially available product may be used as the permeable substrate including paper.

Examples of the commercially available product include: high-quality paper (A) such as "OK PRINCE SUPERIOR" manufactured by Oji Paper Co., Ltd., "Shiraoi" manufactured by Nippon Paper Industries Co., Ltd., and "NEW NPI SUPERIOR" manufactured by Nippon Paper Industries Co., Ltd.; paper for form such as "NPi Form" manufactured by Nippon Paper Industries Co., Ltd.; high-quality coated paper such as "SILVER DIAMOND" manufactured by Nippon Paper Industries Co., Ltd.; lightly coated paper such as "OK EVERLIGHT COATED" manufactured by Oji Paper Co., Ltd. and "AURORA S" manufactured by Nippon Paper Industries Co., Ltd.; lightweight coated paper (A3) such as "OK COAT L" manufactured by Oji Paper Co., Ltd. and "AURORA L" manufactured by Nippon Paper Industries Co., Ltd.; coated paper (A2, B2) such as "OK TOPCOAT +" manufactured by Oji Paper Co., Ltd. and "AURORA COAT" manufactured by Nippon Paper Industries Co., Ltd.; art paper (A1) such as "OK KINTO +" manufactured by Oji Paper Co., Ltd. and "Tokubishi Art" manufactured by Mitsubishi Paper Mills Limited; various photographic papers for ink jet recording; "BON IVORY" manufactured by Oji Paper Co., Ltd.; "Calolina C2S" manufactured by Intemational; "Carta Integra" manufactured by Metsaboard; "VJFP series" manufactured by YUPO Corporation; and "MAGNO (registered trademark) Gross" manufactured by Sappi, which is a coated paper.

(Pretreatment liquid)

The pretreatment liquid contains water and an aggregating agent.

-Water-

The pretreatment liquid contains water.

A content of water is preferably 50% by mass or more and more preferably 60% by mass or more with respect to the total amount of the pretreatment liquid.

The upper limit of the content of water depends on the amount of other components, but is preferably 90% by

mass or less and more preferably 80% by mass or less with respect to the total amount of the pretreatment liquid.

-Aggregating agent-

The pretreatment liquid of the present disclosure contains at least one aggregating agent.
Examples of the aggregating agent include an organic acid, an organic acid salt, a polyvalent metal compound, and a metal complex.
As the aggregating agent, compounds described in a known document such as paragraphs 0122 to 0130 of WO2020/195360A may be used.
The aggregating agent preferably contains at least one selected from the group consisting of an organic acid and an organic acid salt.
The organic acid is an organic compound having an acidic group.
Examples of the acidic group include a phosphoric acid group, a phosphonic acid group, a phosphinic acid group, a sulfuric acid group, a sulfonic acid group, a sulfinic acid group, and a carboxy group.
Among these, from the viewpoint of the aggregation rate of the ink, as the acidic group, a phosphoric acid group or a carboxy group is preferable, and a carboxy group is more preferable.
It is preferable that at least a part of the acidic group is dissociated in the pretreatment liquid.
Examples of the organic acid include, as an organic compound having a carboxy group, (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.
Among these, from the viewpoint of the aggregation rate of the ink, as the organic compound having a carboxy group, di- or higher valent carboxylic acid (hereinafter, also referred to as polyvalent carboxylic acid) is preferable, and dicarboxylic acid is more preferable.
Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable; and malonic acid, malic acid, tartaric acid, succinic acid, glutaric acid, pimelic acid, adipic acid, or citric acid is more preferable.
It is preferable that the organic acid has a low pKa (for example, 1.0 to 5.0). As a result, surface charge of particles, for example, the pigment stably dispersed in the ink by a weakly acidic functional group such as a carboxy group, resin particles, and the like can be reduced by bringing the ink into contact with the organic acid having a lower pKa to degrade dispersion stability.
It is preferable that the organic acid has a low pKa, high solubility in water, and a valence of divalent or more. In addition, it is more preferable that the organic acid has a high buffer capacity in a pH region with a pKa lower than a pKa of the functional group (for example, a carboxy group) which stably disperses particles in the ink.
Examples of the organic acid salt include an alkali metal salt of the organic acid and a polyvalent metal salt of the organic acid, and a polyvalent metal salt of the organic acid is preferable.
Examples of the polyvalent metal salt include salts of alkaline earth metals of Group 2 (such as magnesium and calcium) in the periodic table, salts of transition metals of Group 3 (such as lanthanum) in the periodic table, salts of metals of Group 13 (such as aluminum) in the periodic table, and salts of lanthanides (such as neodymium).
As the polyvalent metal salt, a calcium salt, a magnesium salt, or an aluminum salt is preferable, and a calcium salt or a magnesium salt is more preferable.
It is preferable that at least a part of the polyvalent metal salt of the organic acid is dissociated into polyvalent metal ions and counter ions in the pretreatment liquid.
A proportion of the organic acid and the organic acid salt in the aggregating agent is preferably 50% by mass to 100% by mass, more preferably 60% by mass to 100% by mass, and still more preferably 80% by mass to 100% by mass.
A content of the aggregating agent in the pretreatment liquid is preferably 1.0% by mass to 40% by mass, more preferably 3.0% by mass to 30% by mass, and still more preferably 10% by mass to 30% by mass with respect to the total amount of the pretreatment liquid.

-Additive (A)-

The pretreatment liquid contains the above-described additive (A).
A content of the additive (A) in the pretreatment liquid is preferably 1.0% by mass to 20% by mass, more preferably 3.0% by mass to 15% by mass, and still more preferably 3.0% by mass to 10% by mass with respect to the total amount of the pretreatment liquid.

-Organic solvent-

The pretreatment liquid may contain at least one organic solvent.

The type of the organic solvent is not particularly limited, and examples thereof include monoalcohol having 1 to 4 carbon atoms; diol such as 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol; triol such as glycerin, 1,2,6-hexanetriol, and trimethylolpropane; alkylene glycol such as ethylene glycol and propylene glycol; alkylene glycol monoalkyl ether such as ethylene glycol monoalkyl ether and propylene glycol monoalkyl ether; polyalkylene glycol such as diethylene glycol, triethylene glycol, tetraethylene glycol, pentaethylene glycol, dipropylene glycol, and polyoxyethylene polyoxypropylene glycol; polyalkylene glycol ether such as diethylene glycol monoalkyl ether, triethylene glycol monoalkyl ether, tripropylene glycol monoalkyl ether, and polyoxypropylene glyceryl ether; and 2-pyrrolidone and N-methyl-2-pyrrolidone.

A content of the organic solvent is preferably 1% by mass to 20% by mass and more preferably 3% by mass to 10% by mass with respect to the total amount of the pretreatment liquid.

-Surfactant-

The pretreatment liquid may contain at least one surfactant.

The type of the surfactant is not particularly limited, and may be any of an anionic surfactant, a cationic surfactant, a betaine-based surfactant, or a nonionic surfactant. In addition, examples of the surfactant include an acrylic surfactant, a fluorine-based surfactant, and a silicone-based surfactant.

The surfactant may function as an antifoaming agent.

A content of the surfactant is preferably 0.01% by mass to 6% by mass and more preferably 0.1% by mass to 4% by mass with respect to the total amount of the pretreatment liquid.

-Other components-

The pretreatment liquid may contain other components as necessary, in addition to the above-described components.

Examples of other components which can be contained in the pretreatment liquid include known additives such as a solid wetting agent, colloidal silica, an inorganic salt, an antifading agent, an emulsion stabilizer, a penetration enhancer, an ultraviolet absorbing agent, a preservative, a fungicide, a pH adjusting agent, a viscosity-adjusting agent, a rust inhibitor, a chelating agent, and a water-soluble polymer compound (for example, water-soluble polymer compounds described in paragraphs 0026 to 0080 of JP2013-001854A).

-Physical properties of pretreatment liquid-

A pH of the pretreatment liquid is preferably 0.5 to 7.0, more preferably 3.0 to 6.0, and still more preferably 3.0 to 5.0.

Here, the pH means a pH at 25°C.

The pH is measured at 25°C using, for example, a pH meter (for example, a pH meter manufactured by DKK-Toa Corporation (model number "HM-31")).

A viscosity of the pretreatment liquid is preferably 0.5 mPa·s to 20 mPa·s, and more preferably 1 mPa·s to 10 mPa·s. The viscosity is a value measured at 30°C using a viscometer. The viscosity is measured at 30°C using a viscometer, for example, a TV-22 type viscometer manufactured by Toki Sangyo Co., Ltd.

A surface tension of the pretreatment liquid is preferably 60 mN/m or less, more preferably 20 mN/m to 50 mN/m, and still more preferably 30 mN/m to 45 mN/m. The surface tension is a value measured at a temperature of 25°C. The surface tension is measured at 25°C using a surface tension meter, for example, by a plate method using an automatic surface tension meter (product name "CBVP-Z") manufactured by Kyowa Interface Science Co., Ltd.

(Application of pretreatment liquid)

A method of applying the pretreatment liquid is not particularly limited, and examples thereof include known methods such as a coating method, a dipping method, and an ink jet recording method.

Examples of the coating method include known coating methods using a bar coater, an extrusion die coater, an air doctor coater, a blade coater, a rod coater, a knife coater, a squeeze coater, a reverse roll coater, or the like.

An application amount of the pretreatment liquid is preferably 1 $g/m^2$ to 30 $g/m^2$, more preferably 2 $g/m^2$ to 25 $g/m^2$, and still more preferably 5 $g/m^2$ to 20 $g/m^2$.

An application amount of the additive (A) by the application of the pretreatment liquid is preferably 0.05 $g/m^2$ to 2.00 $g/m^2$.

The application amount of the additive (A) by the application of the pretreatment liquid being 0.05 $g/m^2$ or more contributes to improving the light fastness of the image.

From the viewpoint of further improving the light fastness of the image, the application amount of the additive (A) by the application of the pretreatment liquid is preferably 0.30 $g/m^2$ or more, more preferably 0.50 $g/m^2$ or more, and still more preferably 1.00 $g/m^2$ or more.

From the viewpoint of further improving the color density and/or the image quality of the image, the application amount of the additive (A) by the application of the pretreatment liquid is preferably 1.75 $g/m^2$ or less, and more preferably 1.50 $g/m^2$ or less.

(Heating and drying pretreatment liquid)

The pretreatment liquid applying step may include applying the pretreatment liquid onto the recording medium and heating and drying the pretreatment liquid applied onto the recording medium.

Examples of a unit for heating and drying the pretreatment liquid include known heating units such as a heater, known blowing units such as a dryer, and units combining these.

Examples of the method for heating and drying the pretreatment liquid include a method of applying heat from a side of the recording medium opposite to the surface onto which the pretreatment liquid has been applied using a heater or the like, a method of applying warm air or hot air to the surface of the recording medium onto which the pretreatment liquid has been applied, a method of applying heat from the surface of the recording medium onto which the pretreatment liquid has been applied or from a side of the recording medium opposite to the surface onto which the pretreatment liquid has been applied using an infrared heater, and a method of combining a plurality of these methods.

The heating temperature during the heating and drying of the pretreatment liquid is preferably 45°C or higher, more preferably 50°C or higher, and still more preferably 55°C or higher.

The upper limit value of the heating temperature is not particularly limited, and is, for example, 150°C.

The heating time is not particularly limited, but is preferably 0.5 seconds to 30 seconds, more preferably 1 second to 10 seconds, and particularly preferably 1 second to 5 seconds.

<Ink applying step>

The image recording method according to the present disclosure includes an ink applying step.

The ink applying step is a step of applying an ink containing water and a pigment onto a region of the recording medium, onto which the pretreatment liquid has been applied, by an ink jet method.

In the present step, the ink is applied onto the region of the recording medium, onto which the pretreatment liquid has been applied, whereby components (for example, the pigment) in the ink are aggregated by the action of the aggregating agent derived from the pretreatment liquid on the recording medium, and thus an image is obtained.

(Ink)

The ink contains water and a pigment.

-Water-

A content of water is preferably 20% by mass or more, more preferably 30% by mass or more, and still more preferably 40% by mass or more with respect to the total amount of the ink.

The upper limit of the content of water also depends on the amounts of other components. The upper limit of the content of water with respect to the total amount of the ink may be, for example, 90% by mass or 80% by mass.

-Pigment-

The ink according to the present disclosure contains at least one pigment.

The pigment may be an organic pigment or an inorganic pigment.

Examples of the organic pigment include an azo pigment, a polycyclic pigment, a chelate dye, a nitro pigment, a nitroso pigment, and aniline black. Among these, the organic pigment is preferably an azo pigment or a polycyclic pigment.

Examples of the azo pigment include an azo lake, an insoluble azo pigment, a condensed azo pigment, and a chelated azo pigment.

Examples of the polycyclic pigment include a phthalocyanine pigment, a perylene pigment, a perinone pigment,

an anthraquinone pigment, a quinacridone pigment, a dioxazine pigment, an indigo pigment, a thioindigo pigment, an isoindolinone pigment, and a quinophthalone pigment.

Examples of the chelate dye include a basic dye-type chelate, and an acid dye-type chelate.

Examples of the inorganic pigment include titanium oxide, iron oxide, calcium carbonate, barium sulfate, aluminum hydroxide, Barium Yellow, Cadmium Red, Chrome Yellow, and carbon black.

Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

A volume average particle size of the pigment is preferably 10 nm to 200 nm, more preferably 30 nm to 180 nm, and still more preferably 50 nm to 160 nm. In a case where the volume average particle size is 200 nm or less, color reproduction is improved, and jettability is improved in a case where an image is recorded by an ink jet recording method. In a case where the volume average particle size is 10 nm or more, the light fastness is improved.

In addition, a particle size distribution of the pigment is not particularly limited, and may be any of a wide particle size distribution or a monodispersed particle size distribution. In addition, two or more pigments each having a monodisperse particle size distribution may be used as a mixture.

The volume average particle size and the particle size distribution of the pigment are values measured by a particle size distribution analyzer (for example, MICROTRAC UPA (registered trademark) EX150 manufactured by NIKKISO CO., LTD.).

A content of the pigment is preferably 0.2% by mass to 20.0% by mass and more preferably 1.0% by mass to 10.0% by mass with respect to the total amount of the ink.

-Pigment dispersing agent-

The ink of the present disclosure may contain a pigment dispersing agent.

In the present disclosure, the pigment dispersing agent is a compound having a function of dispersing the pigment. The pigment dispersing agent is adsorbed on the surface of the pigment, and at least a part of the surface of the pigment is coated with the pigment dispersing agent, whereby the pigment can be dispersed in water.

It is preferable that the ink of the present disclosure, which contains the pigment dispersing agent, is prepared by using a pigment dispersion liquid containing the pigment and the pigment dispersing agent.

In a case where a self-dispersing pigment which can be dispersed in water even in the absence of the pigment dispersing agent is used as the pigment, the ink may not contain the pigment dispersing agent.

A form of the pigment dispersing agent is not particularly limited, and may be any of a random resin, a block resin, or a graft resin.

In addition, the pigment dispersing agent may be a resin having a crosslinking structure.

In the present disclosure, a resin refers to a compound having a weight-average molecular weight (Mw) of 1,000 or more.

In the present disclosure, the weight-average molecular weight (Mw) means a value measured by gel permeation chromatography (GPC). For the measurement by gel permeation chromatography (GPC), HLC (registered trademark)-8020GPC (manufactured by Tosoh Corporation) is used as a measuring device, three columns of TSKgel (registered trademark) Super Multipore HZ-H (4.6 mmID x 15 cm, manufactured by Tosoh Corporation) are used as a column, and tetrahydrofuran (THF) is used as an eluent. In addition, the measurement is performed under measurement conditions of a sample concentration of 0.45% by mass, a flow rate of 0.35 ml/min, a sample injection volume of 10 μl, and a measurement temperature of 40°C using an RI detector. A calibration curve is created using 8 samples of "F-40", "F-20", "F-4", "F-1", "A-5000", "A-2500", "A-1000", and "n-propylbenzene" which are "Standard Samples TSK standard, polystyrene" (manufactured by TOSOH Corporation).

-Water-soluble organic solvent-

The ink may contain at least one water-soluble organic solvent.

As a result, the jettability of the ink is further improved.

In the present disclosure, "water-soluble" in the "water-soluble organic solvent" means a property of being dissolved in 1 g or more in 100 g of water at 25°C.

The type of the water-soluble organic solvent which can be contained in the ink is not particularly limited, and examples thereof include monoalcohol having 1 to 4 carbon atoms; diol such as 1,3-propanediol, 1,2-butanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol; triol such as glycerin, 1,2,6-hexanetriol, and trimethylolpropane; alkylene glycol such as ethylene glycol and propylene glycol (also known as 1,2-propanediol); alkylene glycol monoalkyl ether such as ethylene glycol monoalkyl ether and propylene glycol monoalkyl ether; polyalkylene glycol such

as diethylene glycol, triethylene glycol, tetraethylene glycol, pentaethylene glycol, dipropylene glycol, and polyoxyethylene polyoxypropylene glycol; polyalkylene glycol ether such as diethylene glycol monoalkyl ether, triethylene glycol monoalkyl ether, tripropylene glycol monoalkyl ether, and polyoxypropylene glyceryl ether; and 2-pyrrolidone and N-methyl-2-pyrrolidone.

It is preferable that the water-soluble organic solvent in the ink includes at least one kind selected from the group consisting of alkylene glycol and alkylene glycol monoalkyl ether.

A content of the water-soluble organic solvent is preferably 10% by mass to 50% by mass and more preferably 15% by mass to 40% by mass with respect to the total amount of the ink.

-Surfactant-

The ink may contain at least one surfactant.

The type of the surfactant is not particularly limited, and may be any of an anionic surfactant, a cationic surfactant, a betaine-based surfactant, or a nonionic surfactant.

In addition, examples of the surfactant include an acrylic surfactant, a fluorine-based surfactant, and a silicone-based surfactant.

A content of the surfactant is preferably 0.01% by mass to 6% by mass and more preferably 0.1% by mass to 4% by mass with respect to the total amount of the ink.

-Additive (A)-

The ink may contain the above-described additive (A).

In a case where the ink contains the additive (A), the additive (A) in the ink and the additive (A) in the pretreatment liquid may be the same or different from each other.

In a case where the ink contains the additive (A), from the viewpoint of jetting stability of the ink, a content of the additive (A) in the ink is preferably 5% by mass or less, more preferably 4% by mass or less, and still more preferably 3% by mass or less with respect to the total amount of the ink.

-Other components-

The ink may contain other components as necessary, in addition to the above-described components.

Examples of the other components which can be contained in the ink include known additives such as resin particles, a water-soluble resin, colloidal silica, a solid wetting agent, an inorganic salt, an antifading agent, an emulsion stabilizer, a penetration enhancer, an ultraviolet absorber, a preservative, a fungicide, a pH adjusting agent, a viscosity-adjusting agent, a rust inhibitor, and a chelating agent.

-Physical properties of ink-

A pH of the ink (at 25°C) is preferably 6.0 to 11.0, more preferably 6.5 to 10.0, and still more preferably 7.0 to 9.0.

The pH of the ink is measured in the same manner as the pH of the pretreatment liquid.

A viscosity of the ink (at 30°C) is preferably 1.2 mPa·s to 15.0 mPa·s, more preferably 2.0 mPa·s to 13.0 mPa·s, and still more preferably 2.5 mPa·s to 10.0 mPa·s.

The viscosity of the ink is measured in the same manner as the viscosity of the pretreatment liquid.

A surface tension of the ink is preferably 60 mN/m or less, more preferably 20 mN/m to 55 mN/m, and still more preferably 30 mN/m to 50 mN/m.

The surface tension of the ink is measured in the same manner as the surface tension of the pretreatment liquid.

(Application of ink by ink jet method)

A known method can be employed as the ink jet method.

Examples of the ink jet method include an electric charge control method of ejecting ink by using an electrostatic attraction force; a drop-on-demand method (pressure pulse method) of using a vibration pressure of a piezo element; an acoustic ink jet method of converting an electric signal into an acoustic beam, irradiating ink, and ejecting the ink using a radiation pressure; and a thermal ink jet (Bubble jet (registered trademark)) method of heating ink to form air bubbles and utilizing the generated pressure.

Examples of an ink jet head used in the ink jet method include ink jet heads for a shuttle method of using short serial heads which are caused to scan a recording medium in a width direction of the substrate so as to perform recording and ink jet heads for a line method of using line heads which each consist of recording elements arranged for the entire area

of each side of a recording medium.

In the line method, the pattern can be formed on the entire surface of the recording medium by scanning the recording medium in the direction intersecting the arrangement direction of the recording elements, and a transport system such as a carriage which scans the short head is unnecessary. In addition, in the line method, complicated scanning control between the movement of the carriage and the recording medium is unnecessary, and only the recording medium moves, so that the recording speed can be increased as compared with the shuttle method.

A liquid droplet volume of the ink jetted from the ink jet head is preferably 1 pL (picoliter) to 100 pL, more preferably 1.5 pL to 80 pL, and still more preferably 1.8 pL to 50 pL.

An application amount of the ink is preferably 2 g/$m^2$ to 30 g/$m^2$, more preferably 5 g/$m^2$ to 20 g/$m^2$, and still more preferably 8 g/$m^2$ to 15 g/$m^2$.

From the viewpoint of jetting stability of the ink, an application amount of the additive (A) by the application of the ink is preferably 0.50 g/$m^2$ or less, more preferably 0.40 g/$m^2$ or less, still more preferably 0.30 g/$m^2$ or less, and even more preferably 0.20 g/$m^2$ or less.

The applying step may include heating and drying the ink applied onto the recording medium.

Examples of a unit for heating and drying include known heating units such as a heater, known blowing units such as a dryer, and units combining these.

Specific examples of a method of heating the recording medium include a method of applying heat from a side opposite to a surface of the recording medium, onto which the ink has been applied, by a heater or the like, a method of applying warm air or hot air to the surface of the recording medium, onto which the ink has been applied, a method of applying heat from a side of the surface of the recording medium, onto which the ink has been applied, or from a side opposite to the surface by an infrared heater, and a method of combining a plurality of these methods.

The heating temperature during the heating and drying of the ink is preferably 55°C or higher, more preferably 60°C or higher, and still more preferably 65°C or higher.

The upper limit value of the heating temperature is not particularly limited, and is, for example, 150°C.

The heating time is not particularly limited, but is preferably 1 second to 60 seconds, more preferably 3 seconds to 45 seconds, and particularly preferably 5 seconds to 30 seconds.

<Post-treatment liquid applying step>

The image recording method according to the present disclosure may include a post-treatment liquid applying step after the ink applying step described above.

The post-treatment liquid applying step is a step of applying a post-treatment liquid containing a liquid component and a resin onto a region of the recording medium, onto which the ink has been applied.

In a case where the image recording method according to the present disclosure includes the post-treatment liquid applying step, a film (that is, an image) formed of the ink can be coated with a resin film derived from the post-treatment liquid.

As a result, the strength of the image (for example, scratch resistance and rub resistance) is further improved.

(Post-treatment liquid)

The post-treatment liquid contains a liquid component and a resin.

-Resin-

The post-treatment liquid contains at least one resin.

The resin contained in the post-treatment liquid is preferably at least one selected from the group consisting of an acrylic resin, an ester resin, a mixture of an acrylic resin and an ester resin, composite particles including an acrylic resin and an ester resin, a styrene acrylic resin, and a polyurethane resin.

In the present disclosure, the acrylic resin means a polymer (homopolymer or copolymer) of a raw monomer including at least one selected from the group consisting of acrylic acid, a derivative of acrylic acid (for example, acrylic acid ester and the like), methacrylic acid, and a derivative of methacrylic acid (for example, methacrylic acid ester and the like).

A glass transition temperature (Tg) of the resin contained in the post-treatment liquid is preferably 0°C to 200°C and more preferably 30°C to 100°C.

Here, a measurement Tg obtained by actual measurement is employed as the glass transition temperature (Tg) of the resin particles. A method of measuring the measurement Tg can refer to paragraph 0111 of JP2015-25076A.

A content of the resin in the post-treatment liquid is preferably 1% by mass to 30% by mass and more preferably 1% by mass to 25% by mass with respect to the total amount of the post-treatment liquid.

-Liquid component-

The post-treatment liquid contains a liquid component.
Examples of the liquid component include water, an organic solvent, and a polymerizable monomer (for example, a monofunctional or difunctional (meth)acrylic monomer).
A content of the liquid component is preferably 50% by mass or more and more preferably 60% by mass or more with respect to the total amount of the post-treatment liquid.
The upper limit of the content of the liquid component depends on the amount of other components, but is preferably 90% by mass or less and more preferably 80% by mass or less with respect to the total amount of the post-treatment liquid.

-Surfactant-

The post-treatment liquid may contain at least one surfactant.
The type of the surfactant is not particularly limited, and may be any of an anionic surfactant, a cationic surfactant, a betaine-based surfactant, or a nonionic surfactant. In addition, examples of the surfactant include an acrylic surfactant, a fluorine-based surfactant, and a silicone-based surfactant.
The surfactant may function as an antifoaming agent.
A content of the surfactant is preferably 0.01% by mass to 6% by mass and more preferably 0.1% by mass to 4% by mass with respect to the total amount of the post-treatment liquid.

-Additive (A)-

The post-treatment liquid may contain the above-described additive (A).
In a case where the post-treatment liquid contains the additive (A), the additive (A) in the post-treatment liquid and the additive (A) in the pretreatment liquid may be the same or different from each other.
In a case where the post-treatment liquid contains the additive (A), from the viewpoint of texture of a printed material (that is, an image recorded material including a recording medium and an image), a content of the additive (A) in the post-treatment liquid is preferably 10% by mass or less, more preferably 6.0% by mass or less, and still more preferably 4.0% by mass or less with respect to the total amount of the post-treatment liquid.

-Other components-

The post-treatment liquid may contain other components as necessary, in addition to the above-described components.
Examples of the other components which can be contained in the post-treatment liquid include the same components as the other components which can be contained in the pretreatment liquid.

-Physical properties of post-treatment liquid-

A pH of the post-treatment liquid is preferably 3.0 to 10.0, more preferably 4.0 to 9.5, and still more preferably 5.0 to 9.0.
Here, the pH means a pH at 25°C.
The pH is measured at 25°C using, for example, a pH meter (for example, a pH meter manufactured by DKK-Toa Corporation (model number "HM-31")).
A viscosity of the post-treatment liquid is preferably 3.0 mPa·s to 100 mPa·s, and more preferably 5.0 mPa·s to 50 mPa·s. The viscosity is a value measured at 30°C using a viscometer. The viscosity is measured at 30°C using a viscometer, for example, a TV-22 type viscometer manufactured by Toki Sangyo Co., Ltd.
A surface tension of the post-treatment liquid is preferably 60 mN/m or less, more preferably 20 mN/m to 50 mN/m, and still more preferably 30 mN/m to 45 mN/m. The surface tension is a value measured at a temperature of 25°C. The surface tension is measured at 25°C using a surface tension meter, for example, by a plate method using an automatic surface tension meter (product name "CBVP-Z") manufactured by Kyowa Interface Science Co., Ltd.

(Application of post-treatment liquid)

A method of applying the post-treatment liquid is not particularly limited, and examples thereof include known methods such as a printing method (for example, a flexographic printing method), a coating method, a dipping method, and an ink jet recording method.

An application amount of the post-treatment liquid is preferably 2 g/$m^2$ to 30 g/$m^2$, more preferably 3 g/$m^2$ to 25 g/$m^2$, and still more preferably 5 g/$m^2$ to 25 g/$m^2$.

From the viewpoint of texture of a printed material (that is, an image recorded material including a recording medium and an image), an application amount of the additive (A) by the application of the post-treatment liquid is preferably 0.50 g/$m^2$ or less, more preferably 0.40 g/$m^2$ or less, still more preferably 0.30 g/$m^2$ or less, and even more preferably 0.20 g/$m^2$ or less.

(Heating and drying post-treatment liquid)

The post-treatment liquid applying step may include applying the post-treatment liquid onto the recording medium and heating and drying the post-treatment liquid applied onto the recording medium.

A preferred aspect of the heating and drying of the post-treatment liquid is the same as the preferred aspect of the heating and drying of the pretreatment liquid.

Examples

Hereinafter, examples of the present disclosure will be shown, but the present disclosure is not limited to the following examples.

In the following, "part" and "%" are on a mass basis unless otherwise specified.

[Examples 1 to 46 and Comparative Examples 1 to 6]

<Preparation of ink>

By mixing the components shown in Table 1 and removing coarse particles using a 1 μm filter, each of a cyan ink (IC-1), a magenta ink (IM-1) and (IM-2), a yellow ink (IY-1) and (IY-2), and a black ink (IK-1) was obtained.

In Table 1, "Residual amount" as a content of water means a residual amount for the total of all components to be 100% by mass.

In Table 1, "*1" means an amount of an additive (A)-containing composition corresponding to the content of the additive (A) shown in Tables 2 and 3.

In Table 1, blank and "-" both mean that the corresponding component was not contained.

In any of the inks, a volume average particle size of the pigment was in a range of 106 nm to 130 nm, a pH (25°C) was in a range of 7.7 to 8.0, a viscosity (30°C) was in a range of 3.6 to 3.8, a surface tension (25°C) was in a range of 34.0 mN/m to 37.0 mN/m, and an electrical conductivity was in a range of 37 mS/m to 90 mS/m.

In Examples 1 to 46 and Comparative Examples 1 to 6, the black ink (IK-1), the cyan ink (IC-1), the magenta ink (IM-1), and the yellow ink (IY-1) were used; and in Examples 101 and 102 described later, the black ink (IK-1), the cyan ink (IC-1), the magenta ink (IM-2), and the yellow ink (IY-2) were used.

[Table 1]

| | Ink | | | | | |
|---|---|---|---|---|---|---|
| | IC-1 | IM-1 | IM-2 | IY-1 | IY-2 | IK-1 |
| Pro-Jet APD1000 Cyan | 21.50 | | | | | |
| Pro-Jet APD1000 Magenta | | 36.20 | | | | |
| Pro-Jet APD1000 Red | | | 28.00 | | | |
| Pro-Jet APD1000 Yellow-TP | | | | 29.00 | | |
| Pro-Jet APD1000 Yellow-LF | | | | | 27.00 | |
| Pro-Jet APD1000 Black | | | | | | 30.50 |
| Glycerin | 22.10 | 19.55 | 19.75 | 20.10 | 18.70 | 17.85 |
| Propylene glycol | 15.00 | 15.00 | 15.00 | 15.00 | 15.00 | 15.00 |
| Polyvinylpyrrolidone | 0.10 | 0.10 | 0.10 | 0.10 | 0.10 | 0.10 |
| SURFYNOL 465 | 0.80 | 0.90 | 0.90 | 0.80 | 0.80 | 1.00 |
| SNOWTEX XS | 0.27 | 0.27 | 0.27 | 0.27 | 0.27 | 0.27 |

(continued)

| | Ink | | | | | |
|---|---|---|---|---|---|---|
| | IC-1 | IM-1 | IM-2 | IY-1 | IY-2 | IK-1 |
| BYK-024 | 0.01 | 0.01 | 0.01 | 0.01 | 0.01 | 0.01 |
| Acetate | 0.04 | 0.04 | 0.05 | 0.06 | 0.08 | 0.05 |
| Additive (A)-containing composition shown in Table 2 or Table 3 | *1 | *1 | - | *1 | - | *1 |
| Water | Residual amount | Residual amount | Residual amount | Residual amount | Residual amount | Residual amount |
| (% by mass) | | | | | | |

Details of the components in Table 1 are as follows.

· Pro-Jet APD1000 Cyan ... pigment dispersion liquid containing Pigment Blue 15:3 (concentration of pigment solid contents: 14.1%, pigment average particle diameter: 106 nm); manufactured by FUJIFILM Imaging Colorants Inc.
· Pro-Jet APD1000 Magenta ... pigment dispersion liquid containing Pigment Red 122 (concentration of pigment solid contents: 14.0%, pigment average particle diameter: 117 nm); manufactured by FUJIFILM Imaging Colorants Inc.
· Pro-Jet APD1000 Red ... pigment dispersion liquid containing Pigment Red 254 (concentration of pigment solid contents: 14.3%, pigment average particle diameter: 115 nm); manufactured by FUJIFILM Imaging Colorants Inc.
· Pro-Jet APD1000 Yellow-TP ... pigment dispersion liquid containing Pigment Yellow 74 (concentration of pigment solid contents: 15.3%, pigment average particle diameter: 129 nm); manufactured by FUJIFILM Imaging Colorants Inc.
· Pro-Jet APD1000 Yellow-LF ... pigment dispersion liquid containing Pigment Yellow 155 (concentration of pigment solid contents: 14.7%, pigment average particle diameter: 140 nm); manufactured by FUJIFILM Imaging Colorants Inc.
· Pro-Jet APD1000 Black ... pigment dispersion liquid containing Pigment Black 7 (concentration of pigment solid contents: 14.3%, pigment average particle diameter: 115 nm); manufactured by FUJIFILM Imaging Colorants Inc.
· Polyvinylpyrrolidone ... Polyvinylpyrrolidone K15 (average molecular weight: 10,000); manufactured by Tokyo Chemical Industry Co., Ltd.
· SURFYNOL 465 ... acetylene glycol-based surfactant; manufactured by Nissin Chemical Co., Ltd.
· SNOWTEX XS ... colloidal silica; manufactured by Nissan Chemical Corporation
· BYK-024 ... defoamer; manufactured by BYK Japan K.K.

<Preparation of pretreatment liquid (PR-1)>

The following components were mixed and filtered through a 1 μm filter to obtain a pretreatment liquid (PR-1) having a pH of 4.3 (25°C).

-Components of pretreatment liquid (PR-1)-

· Malonic acid ... 10.90% by mass
· Citric acid ... 13.40% by mass
· Diethylene glycol monobutyl ether ... 2.00% by mass
· Potassium hydroxide ... 7.30% by mass
· BYK-038 (defoamer, manufactured by BYK Japan K.K.) ... 0.05% by mass
· Polyacrylic acid 25000 (manufactured by FUJIFILM Wako Pure Chemical Corporation) ... 0.95% by mass
· Additive (A) shown in Table 2 or Table 3 ... content shown in Table 2 or Table 3
· Ion exchange water ... remaining amount set such that total amount of composition was 100% by mass

<Preparation of post-treatment liquid (PT-1)>

The following components were mixed and filtered through a 1 μm filter to obtain a post-treatment liquid (PT-1)

having a pH of 4.3 (25°C).

-Components of post-treatment liquid (PT-1)-

- Propylene glycol ... 2.00% by mass
- BYK-038 (defoamer, manufactured by BYK Japan K.K.) ... 0.05% by mass
- NEOPELEX G-65 ... 0.85% by mass
- JONCRYL 60 ... 5.1% by mass as an amount of solid contents (that is, an amount of resin)
- JONCRYL 537 ... 4.57% by mass as an amount of solid contents (that is, an amount of resin)
- Additive (A) shown in Table 2 or Table 3 ... content shown in Table 2 or Table 3
- Ion exchange water ... remaining amount set such that total amount of composition was 100% by mass

Details of the following components in the components of the post-treatment liquid are as follows.

- NEOPELEX G-65 ... sodium dodecylbenzenesulfonate (soft type) (solid contents: 65%, manufactured by Kao Corporation)
- JONCRYL 60 ... ammonia aqueous solution of styrene-acrylic resin (Tg: 85°C, solid contents: 34% by mass, manufactured by BASF)
- JONCRYL 537 ... aqueous dispersion of a styrene-acrylic resin (Tg: 44°C, particle diameter (D95): 61 nm, solid contents: 45.7% by mass, manufactured by BASF)

<Additive (A)-containing composition in Table 2 or Table 3>

Details of the additive (A)-containing composition in Table 2 or Table 3 are as follows.

The content of the additive (A) in Table 2 or Table 3 means an amount of an active ingredient (that is, a light stabilizer or an ultraviolet absorber as the additive (A)) in each of the following additive (A)-containing compositions.

· Additive (A)-containing composition A-1: Tinuvin 123-DW (N)
... aqueous dispersion of an acrylic polymer including hindered amine-based light stabilizer having the following structure (active ingredient (that is, a light stabilizer as the additive (A)): 30% by mass, total solid content: 50% by mass, manufactured by BASF)

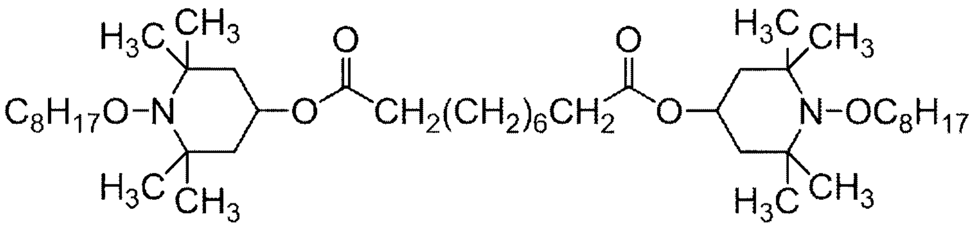

· Additive (A)-containing composition A-2: Tinuvin 249-DW (N)
... neutral type hindered amine-based light stabilizer (active ingredient (that is, a light stabilizer as the additive (A)): 40% by mass, total solid content: 50% by mass, manufactured by BASF)

· Additive (A)-containing composition A-3: Hostavin 3051-2 DISP
... aqueous dispersion of a light stabilizer having the following structure (active ingredient (that is, a light stabilizer as the additive (A)): 52% by mass, manufactured by Clariant)

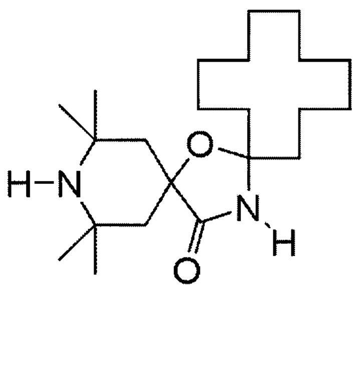

· Additive (A)-containing composition A-4: CHIGUARD 5400WB

... emulsion containing a triazine-based ultraviolet absorber having the following structure (active ingredient (that is, an ultraviolet absorber as the additive (A)): 30% by mass, total solid content: 31% by mass to 34% by mass, manufactured by Chitec Technology Co., Ltd.)

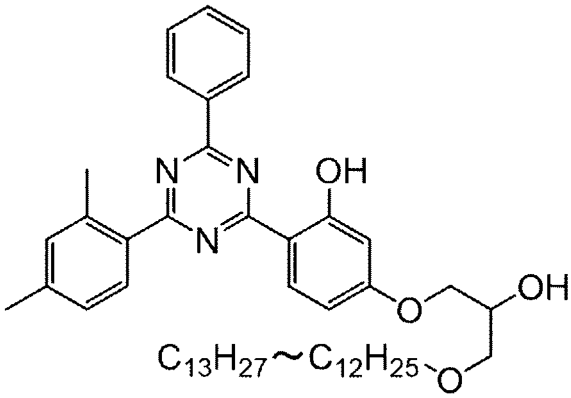

· Additive (A)-containing composition A-5: Tinuvin 400-DW (N) ... aqueous dispersion of an acrylic polymer including a triazine-based ultraviolet absorber having the following structure (active ingredient (that is, an ultraviolet absorber as the additive (A)): 20% by mass, total solid content: 40% by mass, manufactured by BASF)

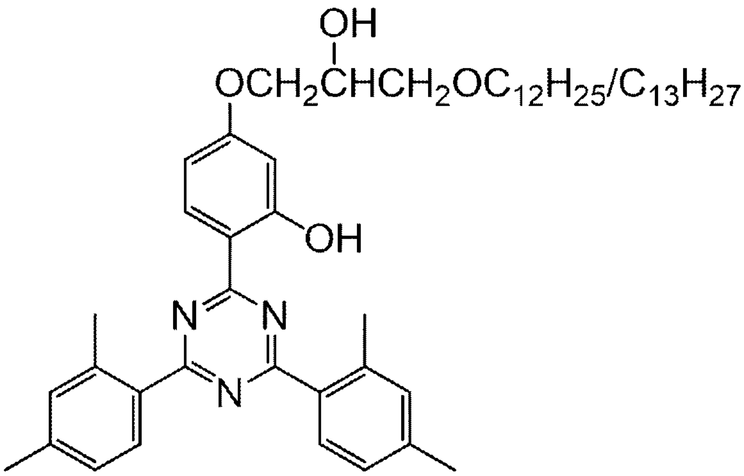

· Additive (A)-containing composition A-6: Tinuvin 477-DW (N)

... aqueous dispersion of an acrylic polymer including a triazine-based ultraviolet absorber (active ingredient (that is, an ultraviolet absorber as the additive (A)): 20% by mass, total solid content: 40% by mass, manufactured by BASF)

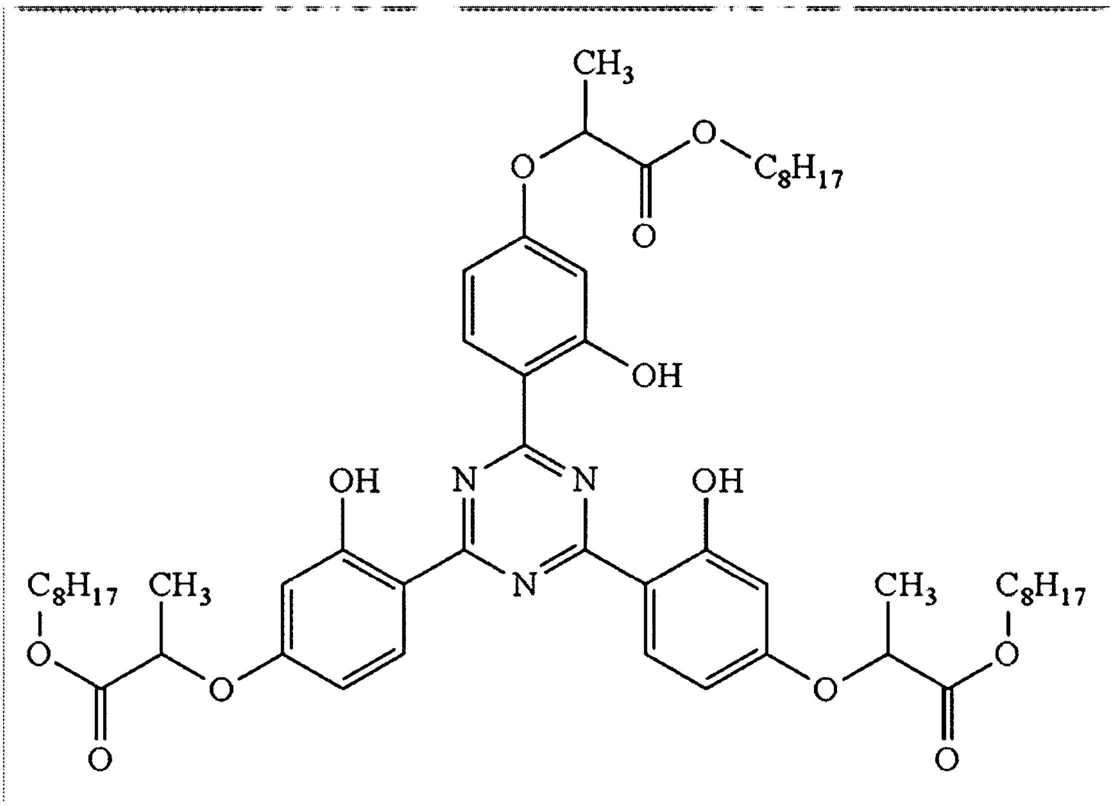

· Additive (A)-containing composition A-7: Tinuvin 479-DW (N)
... aqueous dispersion of an acrylic polymer including a triazine-based ultraviolet absorber (active ingredient (that is, an ultraviolet absorber as the additive (A)): 20% by mass, total solid content: 40% by mass, manufactured by BASF)

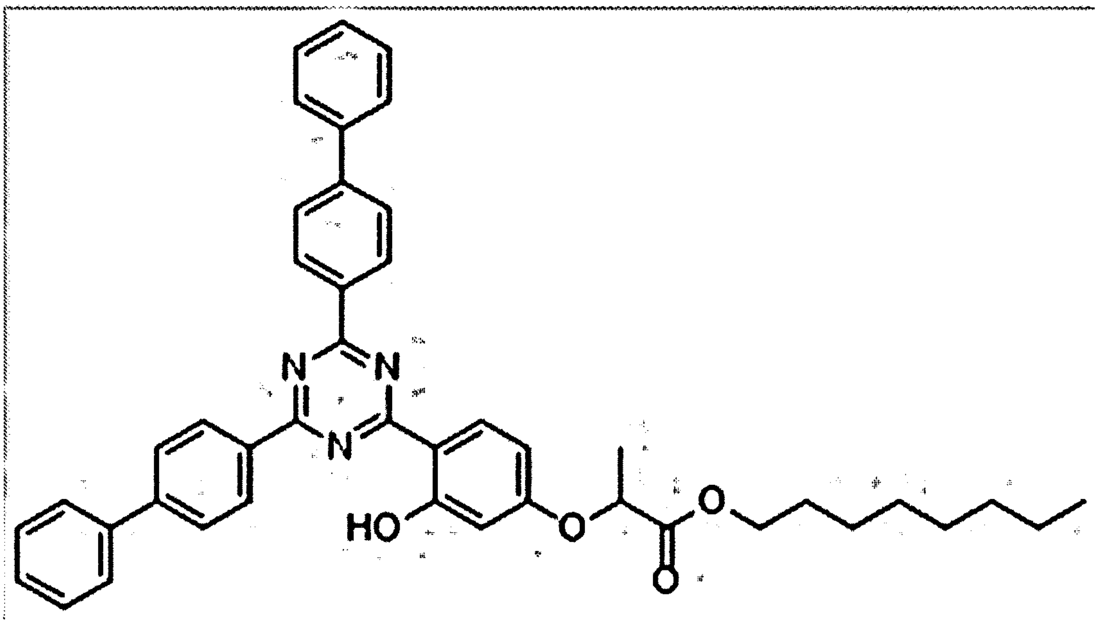

· Additive (A)-containing composition A-8: Tinuvin 9945-DW (N)
... aqueous dispersion of an acrylic polymer including a benzotriazole-based ultraviolet absorber having the following structure (active ingredient (that is, an ultraviolet absorber as the additive (A)): 45% by mass, total solid content: 52% by mass, manufactured by BASF)

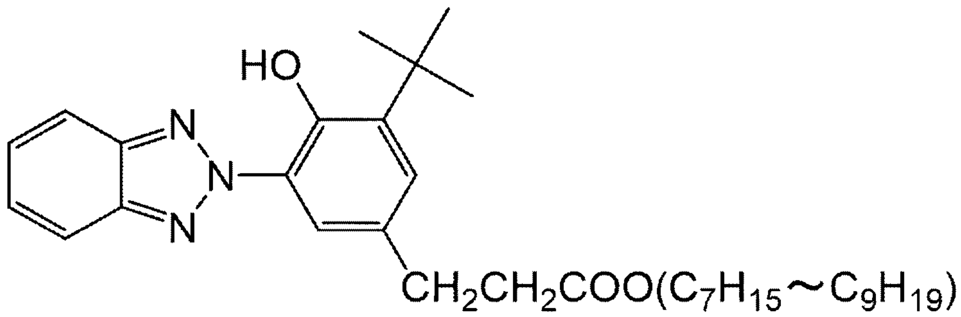

· Additive (A)-containing composition A-9: UVA-805

... aqueous dispersion of a benzotriazole-based polymer ultraviolet absorber having the following structure (solid contents (that is, an ultraviolet absorber as the additive (A)): 33% by mass, manufactured by BASF)

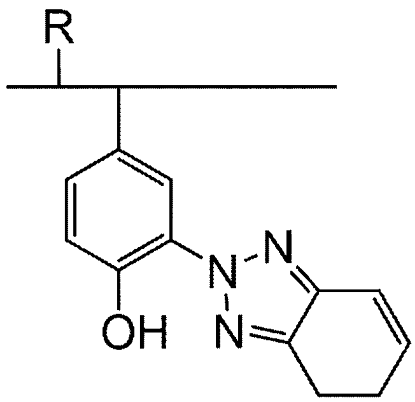

· Additive (A)-containing composition A-10: HOSTAVIN 3315 DISP

... aqueous dispersion of a benzotriazole-based light stabilizer having the following structure (active ingredient (that is, a light stabilizer as the additive (A)): 52% by mass, manufactured by Clariant)

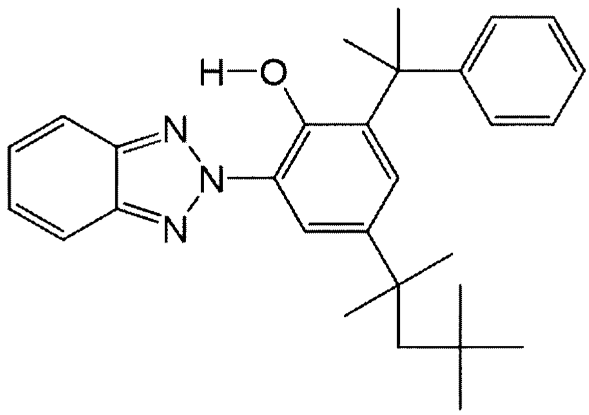

· Additive (A)-containing composition A-11: HOSTAVIN 3326 DISP

... aqueous dispersion of a benzotriazole-based light stabilizer having the following structure (active ingredient (that is, a light stabilizer as the additive (A)): 52% by mass, manufactured by Clariant)

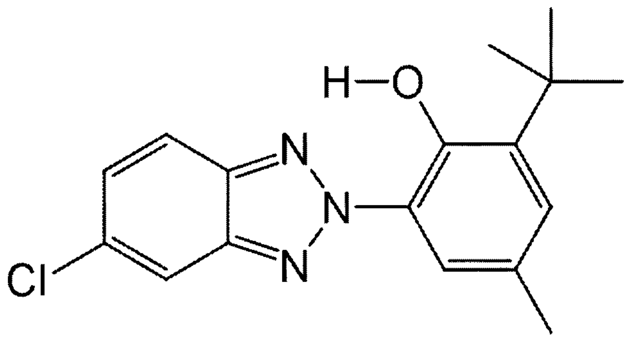

<Image recording>

As a recording medium, NPi Form NEXT-IJ <90> (manufactured by Nippon Paper Industries Co., Ltd.) was used, and an image was recorded by the following method.

(Pretreatment liquid applying step)

The pretreatment liquid (PR-1) (hereinafter, also simply referred to as a pretreatment liquid) was applied onto the recording medium using a coating bar such that the application amount was 5.0 g/$m^2$ in terms of wet mass.

After 2 seconds from the end of the application of the pretreatment liquid, the pretreatment liquid was dried by blowing hot air at a temperature of 100°C and a wind speed of 15 m/sec for 2 seconds from a height of 10 cm to the surface of the recording medium, onto which the pretreatment liquid was applied.

(Ink applying step)

After 3 seconds from the end of the drying of the pretreatment liquid, the black ink (IK-1), the cyan ink (IC-1), the magenta ink (IM-1), and the yellow ink (IY-1) (hereinafter, also referred to as "four-color inks") were applied in this order onto the surface of the recording medium, onto which the pretreatment liquid was applied, by a single-pass method at a resolution of 1200 dpi × 1200 dpi, and then these inks were dried to record a four-color mixed color image.

In the four-color mixed color image, each of the above-described four-color inks (that is, the black ink (IK-1), the cyan ink (IC-1), the magenta ink (IM-1), and the yellow ink (IY-1)) was applied at 1.3 pL (that is, a total of 5.2 pL) to a unit region (that is, one pixel) of 1/1200 inch × 1/1200 inch to record the image.

In addition, each monochromic image was recorded in the same manner as the recording of the four-color mixed color image, except that only one of the four-color inks was used for another recording medium on which the pretreatment liquid was dried.

Each monochromic image was recorded by applying 3.0 pL of the monochromic ink to the one pixel.

The application of each ink was carried out using a piezo full line head having a resolution of 1,200 dots per inch (dpi)/20 inch width as an ink jet head. In a case of applying each ink, a driving frequency was set to 60 kHz, and a transport speed of the recording medium was set to 1,270 mm/sec.

The drying of the ink was carried out by blowing hot air at a temperature of 120°C and a wind speed of 15 m/sec for 10 seconds from a height of 10 cm to the surface of the recording medium, onto which the ink was applied, after 2 seconds from the end of the application of the ink (the end of the application of the four-color inks in the recording of the four-color mixed color image).

(Post-treatment liquid applying step)

In Examples and Comparative Examples other than examples in which the column of the post-treatment liquid application amount in Table 2 and Table 3 is 0 g/$m^2$, the following operation of the post-treatment liquid applying step was carried out. In Examples and Comparative Examples in which the column of the post-treatment liquid application amount is 0 g/$m^2$, the operation of the post-treatment liquid applying step was omitted.

The operation of the post-treatment liquid applying step was as follows.

After 3 seconds from the end of the drying of the ink, the post-treatment liquid was applied onto the surface of the recording medium, onto which the pretreatment liquid and the ink were applied, by a flexographic printing method such that the application amount was 12.0 g/$m^2$ in terms of wet mass for each of the recording medium on which the four-color mixed color image was recorded and the recording medium on which each monochromic image was recorded.

After 2 seconds from the end of the application of the post-treatment liquid, the post-treatment liquid was dried by

blowing hot air at a temperature of 100°C and a wind speed of 15 m/sec for 10 seconds from a height of 10 cm to the surface of the recording medium, onto which the pretreatment liquid was applied.

In this manner, a four-color mixed color image recorded material including the recording medium and the four-color mixed color image, and four monochromic image recorded materials including the recording medium and the monochromic image of each color (specifically, a black image recorded material including the recording medium and the monochromic image of black, a cyan image recorded material including the recording medium and the monochromic image of cyan, a magenta image recorded material including the recording medium and the monochromic image of magenta, and a yellow image recorded material including the recording medium and the monochromic image of yellow) were obtained.

<Evaluation>

The following evaluations were performed using the above-described inks and the above-described image recorded materials.

The evaluation results are shown in Tables 2 and 3.

(Light fastness)

For the image in the yellow image recorded material (that is, the monochromic yellow image), an accelerated light fastness test was performed under conditions of an irradiation illuminance of 180 W/$m^2$, a black panel temperature of 63°C, and a humidity of 55% RH using a Super Xenon Weather Meter XL75 manufactured by Suga Test Instruments Co., Ltd.

A CIE LAB value (L*, a*, b*) of the image was measured using a colorimeter "x-rite eXact" manufactured by X-Rite, Inc. under the conditions of a light source D50 and status-T before the accelerated light fastness test and after the accelerated light fastness test had been started and 1000 hours had passed. Based on the obtained results, a color difference ΔE was calculated.

Based on the obtained color difference ΔE, light fastness of the image was evaluated according to the following evaluation standard.

In the following evaluation standard, the rank at which the light fastness of the image was most excellent is A.

- Evaluation standard for light fastness -

A:

$$\Delta E \leq 3$$

B:

$$3 < \Delta E \leq 6$$

C:

$$6 < \Delta E \leq 9$$

D:

$$9 < \Delta E$$

(Color density)

A density (OD) of the image in the black image recorded material (that is, the monochromatic black image) was measured under conditions of a light source D50 and a status-T using a colorimeter "x-rite eXact" manufactured by X-Rite, Inc.

The color density of the image was evaluated according to the following evaluation standard based on the obtained density (OD).

In the following evaluation standard, the rank at which the color density of the image was most excellent is A.

-Evaluation standard for color density-

A: OD was 1.15 or more.
B: OD was 1.10 or more and less than 1.15.
C: OD was 1.00 or more and less than 1.10.
D: OD was less than 1.00.

(Image quality)

Each of 10 observers visually observed graininess of the image in the four-color mixed color image recorded material (that is, the four-color mixed color image), and evaluated the image quality of the image according to the following evaluation standard.

An average value of the obtained image quality points was calculated for 10 observers.

The image quality of the image was evaluated according to the following evaluation standard based on the obtained average value. In the following evaluation standard, the rank at which the image quality of the image was most excellent is A.

-Scoring standard for image quality-

5: no image unevenness was recognized.
4: image unevenness was hardly recognized.
3: image unevenness was slightly noticeable.
2: image unevenness was noticeable.
1: image unevenness was very noticeable.

-Evaluation standard for image quality-

A: average value of the image quality points was more than 4.5 and 5.0 or less.
B: average value of the image quality points was more than 4.0 and 4.5 or less.
C: average value of the image quality points was more than 3.5 and 4.0 or less.
D: average value of the image quality points was more than 3.0 and 3.5 or less.
E: average value of the image quality points was 3.0 or less.

(Texture)

For the four-color mixed color image recorded material, Clark stiffness was measured using "Clark Stiffness Tester (fully automatic digital type)" manufactured by KUMAGAI RIKI KOGYO Co., Ltd. according to Japanese Industrial Standards JIS P8143:2009 "Paper-Stiffness Test Method-Clark Stiffness Tester Method".

Similarly, Clark stiffness of the recording medium before the application of the pretreatment liquid in the above-described image recording (hereinafter, also referred to as "non-recorded material") was also measured.

Based on these measurement results, a difference from the non-recorded material was calculated according to the following expression.

Difference from non-recorded material (%) = ((Clark stiffness of four-color mixed color image recorded material - Clark stiffness of non-recorded material)/Clark stiffness of non-recorded material) × 100

The texture of the image recorded material was evaluated according to the following evaluation standard based on the calculated result.

In the following evaluation standard, the rank at which the texture of the image recorded material was most excellent is 5.

-Evaluation standard for image quality-

5: difference from the non-recorded material was 30% or less.

4: difference from the non-recorded material was more than 30% and 60% or less.

3: difference from the non-recorded material was more than 60% and 100% or less.

2: difference from the non-recorded material was more than 100% and 150% or less.

1: difference from the non-recorded material was more than 150%.

(Jetting stability)

The black ink (IK-1) was continuously jetted for 10 minutes under the following jetting conditions, and the number of nozzles (nozzle failures) which did not jet was counted in 2048 nozzles.
The jetting stability was evaluated according to the following evaluation standard based on the obtained results.
In the following evaluation standard, the rank at which the jetting stability of the ink was most excellent is 5.

-Jetting conditions-

Head: SAMBA G3L (manufactured by FUJIFILM Dimatix, Inc.)
Jetting liquid droplet volume: 1.5 pL (picoliter)
Driving frequency: 54 kHz

-Evaluation standard for jetting stability-

5: number of nozzle failures was 1 or less.

4: number of nozzle failures was 2 to 4.

3: number of nozzle failures was 5 to 7.

2: number of nozzle failures was 7 to 9.

1: number of nozzle failures was 10 or more.

[Table 2]

| | Pretreatment liquid | | | | Ink | | | | Post-treatment liquid | | | | Additive (A) | | Evaluation result | | | | |
|---|---|---|---|---|---|---|---|---|---|---|---|---|---|---|---|---|---|---|---|
| | Additive (A)-containing composition | Content of additive (A) (% by mass) | Application amount of pretreatment liquid (g/m$^2$) | Application amount of additive (A) (g/m$^2$) | Additive (A)-containing composition | Content of additive (A) (% by mass) | Application amount of ink (g/m$^2$) | Application amount of additive (A) (g/m$^2$) | Additive (A)-containing composition | Content of additive (A) (% by mass) | Application amount of post-treatment liquid (g/m$^2$) | Application amount of additive (A) (g/m$^2$) | Total applying amount (g/m$^2$) | Proportion by application of pretreatment liquid (%) | Weather fastness | Color density | Image quality | Texture | Jetting stability |
| Example 1 | A-1 | 1.0 | 5 | 0.05 | - | 0 | 12 | 0 | - | - | 0 | 0 | 0.05 | 100 | C | A | 5 | 5 | 5 |
| Example 2 | A-1 | 4.0 | 5 | 0.20 | - | 0 | 12 | 0 | - | - | 0 | 0 | 0.20 | 100 | C | A | 5 | 5 | 5 |
| Example 3 | A-1 | 10.1 | 5 | 0.50 | - | 0 | 12 | 0 | - | - | 0 | 0 | 0.50 | 100 | B | A | 5 | 5 | 5 |
| Example 4 | A-1 | 4.5 | 20 | 0.90 | - | 0 | 12 | 0 | - | - | 0 | 0 | 0.90 | 100 | B | A | 5 | 5 | 5 |
| Example 5 | A-1 | 7.5 | 20 | 1.50 | - | 0 | 12 | 0 | - | - | 0 | 0 | 1.50 | 100 | A | A | 4 | 5 | 5 |
| Example 6 | A-1 | 8.8 | 20 | 1.75 | - | 0 | 12 | 0 | - | - | 0 | 0 | 1.75 | 100 | A | A | 3 | 5 | 5 |
| Example 7 | A-1 | 10.0 | 20 | 2.00 | - | 0 | 12 | 0 | - | - | 0 | 0 | 2.00 | 100 | A | A | 2 | 5 | 5 |
| Example 8 | A-2 | 4.5 | 20 | 0.90 | - | 0 | 12 | 0 | - | - | 0 | 0 | 0.90 | 100 | B | A | 5 | 5 | 5 |
| Example 9 | A-3 | 4.5 | 20 | 0.90 | - | 0 | 12 | 0 | - | - | 0 | 0 | 0.90 | 100 | B | A | 5 | 5 | 5 |
| Example 10 | A-4 | 4.5 | 20 | 0.90 | - | 0 | 12 | 0 | - | - | 0 | 0 | 0.90 | 100 | B | A | 5 | 5 | 5 |
| Example 11 | A-5 | 4.5 | 20 | 0.90 | - | 0 | 12 | 0 | - | - | 0 | 0 | 0.90 | 100 | B | A | 5 | 5 | 5 |
| Example 12 | A-6 | 4.5 | 20 | 0.90 | - | 0 | 12 | 0 | - | - | 0 | 0 | 0.90 | 100 | B | A | 5 | 5 | 5 |
| Example 13 | A-7 | 4.5 | 20 | 0.90 | - | 0 | 12 | 0 | - | - | 0 | 0 | 0.90 | 100 | B | A | 5 | 5 | 5 |
| Example 14 | A-8 | 4.5 | 20 | 0.90 | - | 0 | 12 | 0 | - | - | 0 | 0 | 0.90 | 100 | B | A | 5 | 5 | 5 |
| Example 15 | A-9 | 4.5 | 20 | 0.90 | - | 0 | 12 | 0 | - | - | 0 | 0 | 0.90 | 100 | B | A | 5 | 5 | 5 |
| Example 16 | A-10 | 4.5 | 20 | 0.90 | - | 0 | 12 | 0 | - | - | 0 | 0 | 0.90 | 100 | B | A | 5 | 5 | 5 |
| Example 17 | A-11 | 4.5 | 20 | 0.90 | - | 0 | 12 | 0 | - | - | 0 | 0 | 0.90 | 100 | B | A | 5 | 5 | 5 |
| Example 19 | A-1<br>A-4 | 2.3<br>2.3 | 20 | 0.90 | - | 0 | 12 | 0 | - | - | 0 | 0 | 0.90 | 100 | B | A | 5 | 5 | 5 |
| Example 20 | A-1<br>A-8 | 2.3<br>2.3 | 20 | 0.90 | - | 0 | 12 | 0 | - | - | 0 | 0 | 0.90 | 100 | B | A | 5 | 5 | 5 |
| Example 21 | A-4<br>A-8 | 2.3<br>2.3 | 20 | 0.90 | - | 0 | 12 | 0 | - | - | 0 | 0 | 0.90 | 100 | B | A | 5 | 5 | 5 |
| Example 22 | A-1 | 3.6 | 20 | 0.72 | - | 0 | 12 | 0 | A-1 | 0.9 | 20 | 0.18 | 0.90 | 80 | B | B | 5 | 4 | 5 |
| Example 23 | A-1 | 2.9 | 20 | 0.59 | - | 0 | 12 | 0 | A-1 | 1.6 | 20 | 0.31 | 0.90 | 65 | B | C | 5 | 3 | 5 |
| Example 24 | A-1 | 2.3 | 20 | 0.45 | - | 0 | 12 | 0 | A-1 | 2.3 | 20 | 0.45 | 0.90 | 50 | B | C | 5 | 2 | 5 |
| Example 25 | A-1 | 3.6 | 20 | 0.72 | A-1 | 1.5 | 12 | 0.18 | - | - | 0 | 0 | 0.90 | 80 | B | A | 4 | 5 | 4 |
| Example 26 | A-1 | 2.9 | 20 | 0.59 | A-1 | 2.6 | 12 | 0.31 | - | - | 0 | 0 | 0.90 | 65 | B | B | 3 | 5 | 3 |
| Example 27 | A-1 | 2.3 | 20 | 0.45 | A-1 | 3.8 | 12 | 0.45 | - | - | 0 | 0 | 0.90 | 50 | B | C | 2 | 5 | 2 |

[Table 3]

| | Pretreatment liquid | | | | Ink | | | | Post-treatment liquid | | | | Additive (A) | | Evaluation result | | | | |
|---|---|---|---|---|---|---|---|---|---|---|---|---|---|---|---|---|---|---|---|
| | Additive (A)-containing composition | Content of additive (A) (% by mass) | Application amount of pretreatment liquid (g/m²) | Application amount of additive (A) (g/m²) | Additive (A)-containing composition | Content of additive (A) (% by mass) | Application amount of ink (g/m²) | Application amount of additive (A) (g/m²) | Additive (A)-containing composition | Content of additive (A) (% by mass) | Application amount of post-treatment liquid (g/m²) | Application amount of additive (A) (g/m²) | Total applying amount (g/m²) | Proportion by application of pretreatment liquid (%) | Weather fastness | Color density | Image quality | Texture | Jetting stability |
| Example 28 | A-1 | 3.6 | 20 | 0.72 | A-1 | 0.8 | 12 | 0.09 | A-1 | 0.5 | 20 | 0.09 | 0.90 | 80 | B | C | 4 | 5 | 5 |
| Example 29 | A-1 | 2.9 | 20 | 0.59 | A-1 | 1.3 | 12 | 0.16 | A-1 | 0.8 | 20 | 0.16 | 0.90 | 65 | B | C | 4 | 4 | 4 |
| Example 30 | A-1 | 2.3 | 20 | 0.45 | A-1 | 1.9 | 12 | 0.23 | A-1 | 1.1 | 20 | 0.23 | 0.90 | 50 | B | C | 3 | 3 | 3 |
| Example 31 | A-1 | 2.3 | 20 | 0.45 | - | 0 | 12 | 0 | A-4 | 2.3 | 20 | 0.45 | 0.90 | 50 | B | C | 5 | 2 | 5 |
| Example 32 | A-1 | 2.3 | 20 | 0.45 | - | 0 | 12 | 0 | A-8 | 2.3 | 20 | 0.45 | 0.90 | 50 | B | C | 5 | 2 | 5 |
| Example 33 | A-1 | 2.3 | 20 | 0.45 | A-4 | 3.8 | 12 | 0.45 | - | - | 20 | 0 | 0.90 | 50 | B | C | 2 | 5 | 2 |
| Example 34 | A-1 | 2.3 | 20 | 0.45 | A-8 | 3.8 | 12 | 0.45 | - | - | 20 | 0 | 0.90 | 50 | B | C | 2 | 5 | 2 |
| Example 35 | A-4 | 3.6 | 20 | 0.72 | - | 0 | 12 | 0 | A-1 | 0.9 | 20 | 0.18 | 0.90 | 80 | B | B | 5 | 4 | 5 |
| Example 36 | A-4 | 3.6 | 20 | 0.72 | - | 0 | 12 | 0 | A-4 | 0.9 | 20 | 0.18 | 0.90 | 80 | B | B | 5 | 4 | 5 |
| Example 37 | A-4 | 3.6 | 20 | 0.72 | - | 0 | 12 | 0 | A-8 | 0.9 | 20 | 0.18 | 0.90 | 80 | B | B | 5 | 4 | 5 |
| Example 38 | A-4 | 3.6 | 20 | 0.72 | A-1 | 1.5 | 12 | 0.18 | - | - | 0 | 0 | 0.90 | 80 | B | A | 4 | 5 | 4 |
| Example 39 | A-4 | 3.6 | 20 | 0.72 | A-4 | 1.5 | 12 | 0.18 | - | - | 0 | 0 | 0.90 | 80 | B | A | 4 | 5 | 4 |
| Example 40 | A-4 | 3.6 | 20 | 0.72 | A-8 | 1.5 | 12 | 0.18 | - | - | 0 | 0 | 0.90 | 80 | B | A | 4 | 5 | 4 |
| Example 41 | A-8 | 3.6 | 20 | 0.72 | - | 0 | 12 | 0 | A-1 | 0.9 | 20 | 0.18 | 0.90 | 80 | B | C | 5 | 4 | 5 |
| Example 42 | A-8 | 3.6 | 20 | 0.72 | - | 0 | 12 | 0 | A-4 | 0.9 | 20 | 0.18 | 0.90 | 80 | B | C | 5 | 4 | 5 |
| Example 43 | A-8 | 3.6 | 20 | 0.72 | - | 0 | 12 | 0 | A-8 | 0.9 | 20 | 0.18 | 0.90 | 80 | B | C | 5 | 4 | 5 |
| Example 44 | A-8 | 3.6 | 20 | 0.72 | A-1 | 1.5 | 12 | 0.18 | - | - | 0 | 0 | 0.90 | 80 | B | A | 4 | 5 | 4 |
| Example 45 | A-8 | 3.6 | 20 | 0.72 | A-4 | 1.5 | 12 | 0.18 | - | - | 0 | 0 | 0.90 | 80 | B | A | 4 | 5 | 4 |
| Example 46 | A-8 | 3.6 | 20 | 0.72 | A-8 | 1.5 | 12 | 0.18 | - | - | 0 | 0 | 0.90 | 80 | B | A | 4 | 5 | 4 |
| Comparative Example 1 | - | 0 | 0 | 0.00 | - | 0 | 12 | 0 | - | - | 0 | 0 | 0.00 | - | D | A | 5 | 5 | 5 |
| Comparative Example 2 | A-1 | 0.6 | 5 | 0.03 | - | 0 | 12 | 0 | - | - | 0 | 0 | 0.03 | 100 | D | A | 5 | 5 | 5 |
| Comparative Example 3 | A-1 | 10.5 | 20 | 2.10 | - | 0 | 12 | 0 | - | - | 0 | 0 | 2.10 | 100 | A | A | 1 | 5 | 5 |
| Comparative Example 4 | A-1 | 1.8 | 20 | 0.36 | - | 0 | 12 | 0 | A-1 | 2.7 | 20 | 0.54 | 0.90 | 40 | B | D | 5 | 1 | 5 |
| Comparative Example 5 | A-1 | 1.8 | 20 | 0.36 | A-1 | 4.5 | 12 | 0.54 | - | - | 0 | 0 | 0.90 | 40 | B | A | 1 | 5 | 1 |
| Comparative Example 6 | A-1 | 1.8 | 20 | 0.36 | A-1 | 2.3 | 12 | 0.27 | A-1 | 1.4 | 20 | 0.27 | 0.90 | 40 | B | D | 2 | 2 | 2 |

As shown in Tables 2 and 3, in each of Examples in which at least the pretreatment liquid contained the additive (A) which was at least one selected from the group consisting of a light stabilizer and an ultraviolet absorber, the total application amount of the additive (A) applied onto the recording medium was 0.05 g/m$^2$ to 2.00 g/m$^2$, and the proportion of the amount of the additive (A) by the application of the pretreatment liquid to the total application amount of the additive (A) applied onto the recording medium (that is, "Proportion by application of pretreatment liquid" in Tables 2 and 3) was 50% by mass to 100% by mass, an image having excellent light fastness, color density, and image quality was obtained.

The results of Comparative Examples for each of Examples were as follows.

In Comparative Example 1 in which the pretreatment liquid did not contain the additive (A), the light fastness of the image was reduced.

In Comparative Example 2 in which the total application amount of the additive (A) applied onto the recording medium was less than 0.05 g/m$^2$, the light fastness of the image was reduced.

In Comparative Example 3 in which the total application amount of the additive (A) applied onto the recording medium was more than 2.00 g/m$^2$, the image quality of the image was reduced.

In Comparative Examples 4 to 6 in which the proportion of the amount of the additive (A) by the application of the pretreatment liquid to the total application amount of the additive (A) applied onto the recording medium was less than 50% by mass, the color density or the image quality of the image was reduced.

[Examples 101 and 102]

The same operation as in Example 1 was performed except that the magenta ink (IM-1) was changed to the magenta ink (IM-2), the yellow ink (IY-1) was changed to the yellow ink (IY-2), and the pretreatment liquid (PR-1) was changed to the following pretreatment liquid (PR-2) or (PR-3).

The results are shown in Table 4.

<Preparation of pretreatment liquid (PR-2)>

The following components were mixed and filtered through a 1 μm filter to obtain a pretreatment liquid (PR-2) having a pH of 1.0.

-Components of pretreatment liquid (PR-2)-

· Malonic acid ... 6.80% by mass
· Malic acid ... 5.75% by mass
· Citric acid ... 5.88% by mass
· Phosphoric acid (85%) ... 5.05% by mass
· Diethylene glycol monoethyl ether ... 1.20% by mass
· BYK-093 (defoamer, manufactured by BYK Japan K.K.) ... 0.01% by mass
· Sodium dodecylbenzenesulfonate (soft type) (manufactured by Tokyo Chemical Industry Co., Ltd.) ... 0.50% by mass
· Benzotriazole ... 0.03% by mass
· Additive (A)-containing composition shown in Table 4 ... amount corresponding to the content of additive (A) shown in Table 4
· Ion exchange water ... remaining amount set such that total amount of composition was 100% by mass

<Preparation of pretreatment liquid (PR-3)>

The following components were mixed and filtered through a 1 μm filter to obtain a pretreatment liquid (PR-3) having a pH of 1.0.

-Components of pretreatment liquid (PR-3)-

· Malonic acid ... 0.14% by mass
· Calcium acetate monohydrate ... 6.48% by mass
· Magnesium acetate tetrahydrate ... 10.76% by mass
· Polyethylene glycol 6000 (manufactured by FUJIFILM Wako Pure Chemical Corporation) ... 2.35% by mass
· SURFYNOL 465 (acetylene glycol-based surfactant, manufactured by Nissin Chemical Co., Ltd.) ... 0.20% by mass
· BYK-024 (defoamer, manufactured by BYK Japan K.K.) ... 0.01% by mass
· Additive (A)-containing composition shown in Table 4 ... amount corresponding to the content of additive (A) shown in Table 4
· Ion exchange water ... remaining amount set such that total amount of composition was 100% by mass

[Table 4]

| Example | Pretreatment liquid | | | | | Ink | | | | Post-treatment liquid | | Additive (A) | | Evaluation result | | | | |
|---|---|---|---|---|---|---|---|---|---|---|---|---|---|---|---|---|---|---|
| | Type of pretreatment liquid | Additive (A)-containing composition | Content of additive (A) (% by mass) | Application amount of pretreatment liquid ($g/m^2$) | Application amount of additive (A) ($g/m^2$) | Additive (A)-containing composition | Content of additive (A) (% by mass) | Application amount of ink ($g/m^2$) | Application amount of additive (A) ($g/m^2$) | Application amount of post-treatment liquid ($g/m^2$) | Application amount of additive (A) ($g/m^2$) | Total applying amount ($g/m^2$) | Proportion by application of pretreatment liquid (%) | Weather fastness | Color density | Image quality | Texture | Jetting stability |
| Example 101 | PR-2 | A-1 | 1.0 | 5 | 0.05 | - | 0 | 12 | 0 | 0 | 0 | 0.05 | 100 | C | A | 5 | 5 | 5 |
| Example 102 | PR-3 | A-1 | 1.0 | 5 | 0.05 | - | 0 | 12 | 0 | 0 | 0 | 0.05 | 100 | C | A | 5 | 5 | 5 |

As shown in Table 4, in Examples 101 and 102 in which each formulation of the magenta ink, the yellow ink, and the pretreatment liquid was changed with respect to Example 1, the same results as in Example 1 were obtained.

The disclosure of JP2023-125054 filed on July 31, 2023 is incorporated in the present specification by reference.

All documents, patent applications, and technical standards described in the present specification are herein incorporated by reference to the same extent that each individual document, patent application, or technical standard was specifically and individually indicated to be incorporated by reference.

## Claims

**1.** An image recording method, comprising:

a step of applying a pretreatment liquid comprising water and an aggregating agent onto a recording medium; and
a step of applying an ink comprising water and a pigment onto a region of the recording medium, onto which the pretreatment liquid has been applied, by an ink jet method,
wherein at least the pretreatment liquid comprises an additive (A) which is at least one selected from the group consisting of a light stabilizer and an ultraviolet absorber,
a total application amount of the additive (A) applied onto the recording medium is 0.05 $g/m^2$ to 2.00 $g/m^2$, and
a proportion of an application amount of the additive (A) by the application of the pretreatment liquid to the total application amount of the additive (A) is 50% by mass to 100% by mass.

**2.** The image recording method according to claim 1,

wherein the light stabilizer includes a hindered amine compound (I) having a structure represented by Formula (I),

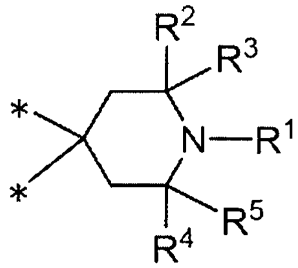

(I)

wherein, in Formula (I),
$R^1$ represents a hydrogen atom, a hydroxy group, an alkyl group having 1 to 40 carbon atoms, an alkoxy group having 1 to 40 carbon atoms, or an acyloxy group having 1 to 40 carbon atoms,
$R^2$ to $R^5$ each independently represent an alkyl group having 1 to 5 carbon atoms, and
two *'s each represent a bonding position,
provided that $R^2$ and $R^3$ or $R^4$ and $R^5$ may be linked to each other through an oxygen atom, a nitrogen atom, or a sulfur atom, or may be directly linked to each other to form a ring.

**3.** The image recording method according to claim 1 or 2,
wherein the ultraviolet absorber comprises at least one selected from the group consisting of a benzotriazole compound and a triazine compound.

**4.** The image recording method according to claim 1 or 2,
wherein the aggregating agent comprises at least one selected from the group consisting of an organic acid and an organic acid salt.

**5.** The image recording method according to claim 1 or 2,
wherein the ink further comprises the additive (A) which is at least one selected from the group consisting of a light stabilizer and an ultraviolet absorber.

**6.** The image recording method according to claim 1 or 2, further comprising:
a step of applying a post-treatment liquid comprising a liquid component and a resin onto a region of the recording medium, onto which the ink has been applied, after the step of applying the ink by an ink jet method.

**7.** The image recording method according to claim 6,
wherein the post-treatment liquid further comprises the additive (A) which is at least one selected from the group consisting of a light stabilizer and an ultraviolet absorber.

**INTERNATIONAL SEARCH REPORT**

International application No. **PCT/JP2024/021868**

**A. CLASSIFICATION OF SUBJECT MATTER**

***B41M 5/00***(2006.01)i; ***B41J 2/01***(2006.01)i; ***C09D 11/322***(2014.01)i
FI: B41M5/00 132; B41J2/01 123; B41J2/01 501; B41M5/00 120; B41M5/00 134; C09D11/322

According to International Patent Classification (IPC) or to both national classification and IPC

**B. FIELDS SEARCHED**

Minimum documentation searched (classification system followed by classification symbols)

B41M5/00; B41J2/01; C09D11/322

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2002-331742 A (CANON KABUSHIKI KAISHA) 19 November 2002 (2002-11-19) claims, paragraphs [0183]-[0214] | 1-4<br>5-7 |
| A | JP 2023-054434 A (RICOH COMPANY, LTD.) 14 April 2023 (2023-04-14) entire text, all drawings | 1-7 |
| A | JP 2001-001627 A (SEIKO EPSON CORPORATION) 09 January 2001 (2001-01-09) entire text, all drawings | 1-7 |
| A | WO 2004/082954 A1 (RICOH COMPANY, LTD.) 30 September 2004 (2004-09-30) entire text, all drawings | 1-7 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 July 2024** | **06 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/021868**

| Patent document cited in search report | Publication date (day/month/year) | Patent family member(s) | Publication date (day/month/year) |
|---|---|---|---|
| JP 2002-331742 A | 19 November 2002 | (Family: none) | |
| JP 2023-054434 A | 14 April 2023 | (Family: none) | |
| JP 2001-001627 A | 09 January 2001 | US 6419352 B1<br>entire text, all drawings<br>EP 959112 A1 | |
| WO 2004/082954 A1 | 30 September 2004 | US 2006/0061643 A1<br>entire text, all drawings<br>JP 2004-299386 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10279854 A
- JP H10279854 A
- JP 10279859 A
- JP H10279859 A
- JP 10279860 A
- JP H10279860 A
- JP 11012519 A
- JP H1112519 A
- JP 2002179963 A
- JP 2002079739 A
- JP 2004276253 A
- WO 2020195360 A
- JP 2013001854 A
- JP 2002012607 A
- JP 2002188025 A
- JP 2003026978 A
- JP 2003342503 A
- JP 2015025076 A
- JP 2023125054 A


### Non-patent literature cited in the description


- Encyclopedia of Pigments. 2000
- **W. HERBST** ; **K. HUNGER**. *Industrial Organic Pigments*